# EUROPEAN PATENT APPLICATION

(11) **EP 1 061 443 A2**
(43) Date of publication of application: **20.12.2000**
(21) Application number: 00304562.2
(22) Date of filing: 30.05.2000
(51) Int. Cl.: G06F 9/46

(54) **Flow control in adaptive pipelines**

(30) Priority: 01.06.1999 US 323592
(71) Applicant: Tektronix, Inc., Beaverton, OR 97077 (US)
(72) Inventor: Neogi, Raja, Portland, Oregon 97229 (US)
(74) Representative: Molyneaux, Martyn William

(57) **Abstract**

A flow control method for active pipelines segments macro processes into tasks. Each time a coprocessing device becomes available, a scheduling algorithm is run to determine which task is dispatched to the available coprocessing device for execution. The scheduling algorithm determines a slack time to meet deadline for each of the tasks and ranks the tasks accordingly, with the tasks having the shorter slack times having the higher ranking. The highest ranked task that has a buffer available to read data from and a buffer available to write data into is dispatched for execution by the available coprocessing device.

## Description

This invention was made with United States Government support under Award No. 70NANB5H1176 by the National Institute of Standards and Technology, Department of Commerce. The United States has certain rights in the invention.

### BACKGROUND OF THE INVENTION

The present invention relates to multimedia services, and more particularly to flow control in adaptive pipelines to accelerate data processing.

Programming functionality at nodes of a network, as opposed to passive transformation by fixed function network elements, is an emerging trend in networking - also known as active networking. Active nodes in the active network use available information within the network to build adaptive transformation tunnels that enable multiple network data flows to exist simultaneously. Nowhere is the need more obvious than in realtime networked multimedia services like transcoding.

Previously the methodology was to develop a system in software, determine what were the hot-spots that contribute to performance degradation, and then develop a coprocessing device to accelerate the hot-spots. Field programmable gate arrays (FPGAs) have been proposed to address flexible reuse of the coprocessing device. As point solutions, this methodology is fine. However application complexity growth at the moment tracks an exponential curve. So it is becoming apparent that this methodology serves a very limited objective. The network bandwidth is growing at a much faster rate than coprocessing speed.

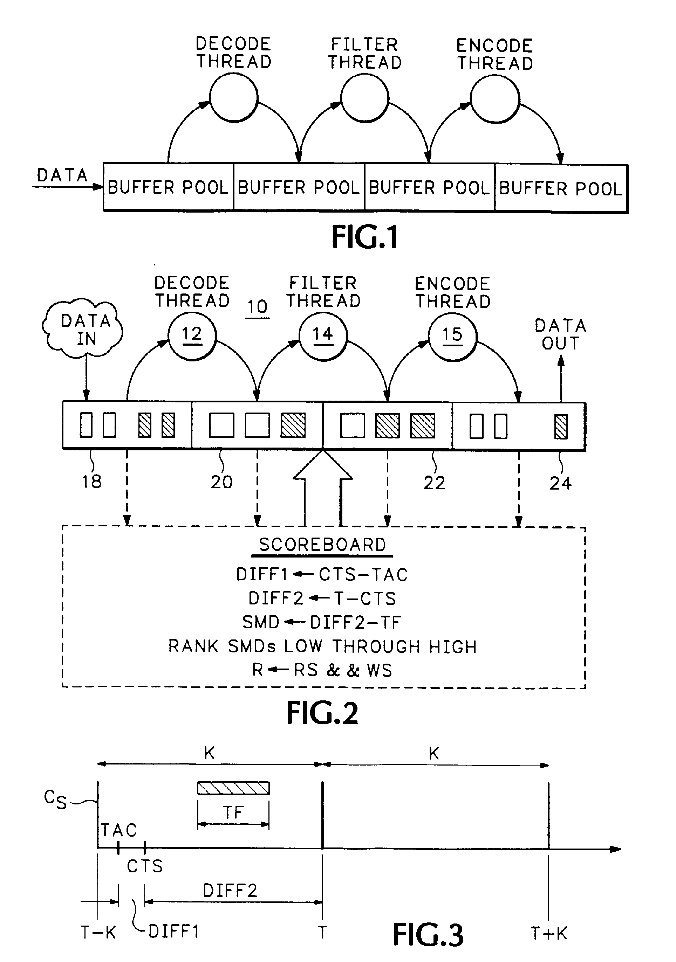

Active nodes in the form of adaptive pipelines are described in co-pending U.S. Patent Application No. 09/191,929 filed November 13, 1998 by Raja Neogi entitled "System for Network Transcoding of Multimedia Data Flow", and optimized routing of client service requests through such an active network is described in co-pending U.S. Patent Application No. 09/ filed , 1999 by Raja Neogi entitled "Resource Constrained Routing in Active Networks." As described in the '929 Patent Application each macro process, such as video data transcoding, at an active node may be split into smaller tasks, typically characterized as processes or threads, to facilitate either virtual or real multiprocessing. For example the transcoder macro process shown in Fig. 1 may be segmented into three tasks - decoding compressed video data, filtering the uncompressed video data from the decoding stage, and encoding the filtered uncompressed video data from the filtering stage to produce transcoded compressed video data. In some cases one or more of the tasks may need more compute cycles than can be allotted. This results in the breakdown of that task into smaller tasks, such as the encoding task being broken down into motion estimating and coding tasks. Adding tasks results in latency, and all clients requesting service have a parameter to specify end-to-end latency for the macro process. When macro process segmentation results in a segmentation strategy that meets pipeline latency, but fails to meet end-to-end latency requirements, sub-optimal parameter values for one or more of the tasks are chosen. For multitasking many macro processes may be running on the active network simultaneously or a macro process may be broken into many tasks, resulting in the total number of tasks generally exceeding the number of coprocessing devices available. Therefore a scheduling policy is needed to assure that all tasks are completed within the given latency requirements. What is desired is a flow control process in adaptive pipelines that schedules multiple tasks to meet latency requirements.

### SUMMARY OF THE INVENTION

Accordingly the present invention provides a flow control process for adaptive pipelines that schedules the tasks that make up the pipelines to assure that latency requirements are met. When a coprocessing device is available to accept a task, a scheduler processes all tasks simultaneously to determine how long data for the task has been in the queue, how much slack is available to process the task based upon its time to finish, and whether the input and output buffers from buffer pools are ready to be read from and written into, respectively. The tasks that are ready are ranked, and the task with the shortest slack time is dispatched to the coprocessing device for execution. For multiple coprocessors, each time one of the coprocessors finishes a task and becomes available, the above algorithm is run to determine the next task to be processed by that coprocessor.

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is an illustrative view of the segmentation of a macro process into a plurality of tasks according to the present invention.

Fig. 2 is a timing diagram for flow control in adaptive pipelines according to the present invention.

Fig. 3 is an illustrative view for flow control in adaptive pipelines according to the present invention.

### DETAILED DESCRIPTION OF THE INVENTION

Each thread or task of a macro process, as shown in Fig. 1, is considered to be an atomic image that executes uninterrupted on a mapped coprocessing device for a maximum preset time limit. In the television arts the human eye is sensitive to artifacts that show up at rates of 30 frames or 60 fields per second. Therefore adaptive pipelines for video applications are driven with a period of 33 milliseconds. This guarantees a throughput of 30 frames per second and also imposes a per-task latency of 33 milliseconds. Each macro process or client requested service is first segmented, as indicated above, into logical tasks with a process cycle, or time to finish (TF), and buffer memory requirement for each task. This preestimation on a logarithmic scale is noted as "network intelligence" in appropriate tables for each type of service request, such as transcoding. If a logical task does not meet the latency criteria, further segmentation is exercised. This approach is applied hierarchically until the grain of the task, perhaps optimized for the coprocessing devices, fits the latency bounds. To assure meeting the latency bounds, sub-optimum parameters may be chosen for some tasks. For example, while coding to generate an MPEG transport stream, one may drop from full CCIR-601 resolution to SIF resolution. Bounded multi-value specification of parameters provides flexibilities.

Referring now to Figs. 2 and 3 an illustrative transcoding macro process **10** is shown segmented into decoding **12**, filtering **14** and encoding **16** threads or tasks. A plurality of buffer pools **18-24** store the data being processed between tasks. The light and dark squares within each of the buffer pools **18-24** represent respectively empty and full buffers, with the size representative of either compressed (narrow in width) or uncompressed (wide in width) video data for this transcoding illustration. Compressed data is received in a buffer in the first buffer pool **18**, where it is accessed by the decoding task **12**. The decoding task **12** then outputs the uncompressed data into a buffer of the next buffer pool **20**. Likewise the filtering task **14** reads uncompressed data from the buffer of the second buffer pool **20** and writes filtered data into a buffer of the next buffer pool **22**. Finally the encoding task **16** reads the filtered data from the buffer of the third buffer pool **22** and writes compressed data into a buffer of the final buffer pool **24**. The resulting compressed data is returned to the requesting client from the buffer of the final buffer pool **24**. Each time the data is placed into a buffer of one of the buffer pools **18-24** it is marked with a time of allocation (TAC) to the buffer pool.

Where the number of coprocessing devices is less than the number of tasks to be performed, each time one of the coprocessing devices becomes available, all of the tasks are processed by a scheduling algorithm to determine which task is dispatched to the available coprocessing device for execution. The time when the scheduling algorithm is called is given a current time stamp (CTS). As shown in Fig. 2 a system clock Cₛ has a period of K, such as 33 milliseconds, and each task needs to be completed within such clock period. A first difference is calculated to determine the "age" of the data in the buffer pool, DIFF1 = CTS -TAC. The oldest data in each buffer pool is the data available for the next task that accesses data from that buffer pool. The CTS for each task is subtracted from the real time T for the end of the current system clock period to determine a second difference, DIFF2 = T - CTS, the remaining time in the period for completion of the task. A slack time to meet the deadline of the end of the period (SMD) is determined by subtracting the TF (time to finish the task) for that task from the time remaining, SMD = DIFF2 - TF. The tasks are then ranked by their SMD values, from lowest value to highest value. The task at the top of the rank is tested to see if it is ready for processing, i.e., is there a buffer in the preceding buffer pool that is ready to be read (RS) and a buffer in the succeeding buffer pool that is ready to be written into (WS). The highest ranked task, i.e., the task with the smallest SMD value, that is ready is then dispatched to the available coprocessing device for execution using the oldest data in the input buffer pool as determined above by DIFF1. This scheduling algorithm is repeated each time one of the coprocessing devices completes a task and becomes available.

The TF for each task is a function of the parameters associated with the task as contained in the network intelligence tables. If the task cannot be completed within the given latency bounds, then a sub-optimum parameter from the tables is used, reducing the TF for that task. In this manner the processing is flexible in order to meet the latency requirements of the service request. Although the above has been illustrated with respect to multiple tasks from a single macro process, more than one macro process may be in process at any given time, which increases the number of tasks vying for processing time. The overhead for the task scheduling is insignificant in comparison to the processing time for the tasks themselves.

Thus the present invention provides a flow control in adaptive pipelines to meet latency bound requirements by determining each time a coprocessor becomes available which waiting task has the shortest slack time within a given processing period, and processing that task if there is both a buffer ready to be read from and another ready to be written into.

## Claims

1. A method of flow control in active pipelines having a plurality of coprocessing devices for processing data comprising the steps of:
segmenting macro processes input to the active pipelines, each macro process being segmented into a plurality of tasks;
when a coprocessing device from the plurality of coprocessing devices becomes available, scheduling the task from among the plurality of tasks to be sent to the available coprocessing device according to specified criteria;
repeating the scheduling step each time one of the coprocessing devices becomes available until there are no more tasks to be processed.

2. The method according to claim 1 wherein the scheduling step comprises the steps of:
determining a slack time for each task within a given processing period;
ranking the tasks in order of the slack times, the shorter slack times having the higher ranks;
dispatching to the available coprocessing device the task having the highest rank that is also ready.

3. The method as recited in claim 2 wherein the determining step comprises the steps of:
obtaining a difference between a time at the end of the given processing period and the time the coprocessing device became available; and
obtaining the slack time as the difference between the difference and a time to finish for the task.

4. The method as recited in claim 3 wherein the determining step further comprises the steps of:
determining if a buffer having input for the task is ready to be read from; and
determining if a buffer for the output from the task is ready to be written into, the task being ready if both conditions are satisfied.
